# FASCICULE DE BREVET EUROPEEN

(11) **EP 0 691 455 B1**
(45) Date de publication et mention de la délivrance du brevet: **09.12.1998**
(21) Numéro de dépôt: 95401609.3
(22) Date de dépôt: 05.07.1995
(51) Int. Cl.: F01D 11/00, F01D 25/32

(54) **Joint métallique à levre et turbomachine équippé de ce joint**
Metallisches Spaltdichtungselement und eine Gasturbine mit diesem Element
Metallic lip seal and turbomachine fitted with said deal

(30) Priorité: 06.07.1994 FR 9408329
(43) Date de publication de la demande: 10.01.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Gouyon, Philippe Albert Charles, F-93100 Montreuil (FR); Rauner, Jacques Alois Antoine, F-77870 Vulaines sur Seine (FR); Jolu, Jérome Emmanuel René, F-77310 Pringy (FR); Rosset, Patrice Jean-Marc, F-77350 le Mee sur Seine (FR); Meunier, Gilles Claude, F-77350 le Mee sur Seine (FR)

(56) Documents cités:
- EP-A- 0 272 966
- DE-B- 2 620 762
- FR-A- 2 596 115

## Description

### Domaine de l'invention

L'invention concerne l'étanchéité dans les turbomachines telles que les turboréacteurs, en particulier au niveau de la turbine haute pression.

### Art antérieur et problème posé

Les turbomachines aéronautiques, telles que les tuboréacteurs équipant les avions, sont utilisées dans toutes les régions du monde, en particulier celles où règne une atmosphère polluante. En particulier, un environnement sablonneux de granulométrie fine est très néfaste au fonctionnement des turboréacteurs, puisque de très fines particules de sable sont aspirées par de telles machines et sont donc confrontées au trajet du flux d'air lui-même aspiré.

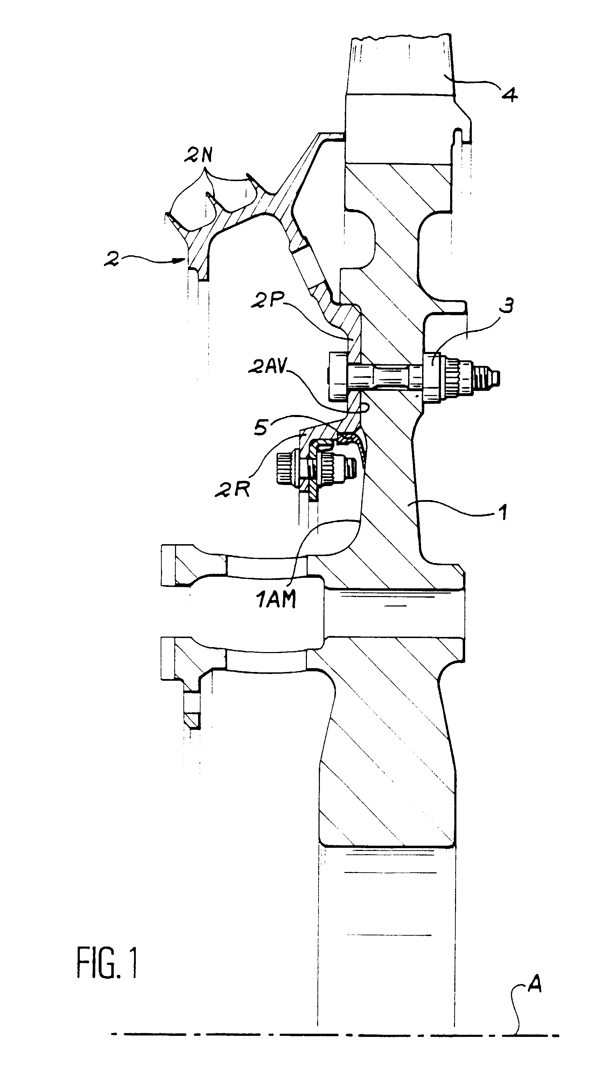

En référence à la figure 1, ces particules sont amenées à la base de la face amont 1AM du disque 1 de la turbine qui tourne autour de l'axe A. Sur ce disque 1, est fixé un labyrinthe 2 dont les nervures 2N extérieures constituent un obstacle aux fuites du flux de refroidissement de la turbine. Ce labyrinthe 2 est fixé sur le disque 1 au moyen de tirants ou de plusieurs boulons 3 qui serrent contre la surface amont 1AM du disque 1, le pied 2P du labyrinthe 2. Un redan 2R du labyrinthe 2 s'étend de l'autre côté, c'est-à-dire vers l'axe A de l'ensemble, constituant en quelque sorte une couronne intérieure. Les particules aspirées par le turboréacteur sont donc, pour certaines d'entre elles, amenées à frapper cette surface amont 1AM et à venir se loger derrière le redan 2R du labyrinthe 2. Compte tenu du fait que des forces centrifuges très importantes sont exercées sur ces pièces mécaniques, un léger fléchissement du redan 2R peut avoir lieu et celui-ci peut avoir tendance à s'élargir, c'est-à-dire à s'éloigner de l'axe A du turboréacteur et à s'écarter de la surface amont 1AM du disque 1. On comprend aisément que les particules peuvent alors se loger entre le disque 1 et le labyrinthe 2, entre la surface amont 1AM du disque et la surface aval 2AV du labyrinthe 2.

Ceci entraîne plusieurs inconvénients qui sont les suivants :
- déformation plastique des boulons 3 de liaison du labyrinthe 2 sur le disque 1, d'où une perte d'effort de serrage entre ces deux pièces ;
- présence de criques, de fissures ou perte de fragments du labyrinthe 2 ; et
- augmentation du jeu entre le redan 2R du labyrinthe 2 et le disque 1, entraînant une fuite sur le débit de ventilation des aubes 4 de turbine, donc une réchauffe de ces dernières.

On connait en outre par FR-A-2 596 115 le montage d'une bague annulaire positionnée au moyen d'une bague élastique. La bague élastique, à section en forme de cornière, est placée dans un logement et serre la bague annulaire, au moyen d'une partie radiale.

Le but de l'invention est donc de remédier à ces inconvénients en proposant un joint spécialement adapté à cette situation.

### Résumé de l'invention

Le premier objet principal de l'invention est un joint métallique à lèvre, comportant :
- un corps de forme torique, de diamètre externe et d'axe déterminés ; et
- une lèvre torique fixée sur le corps et s'étendant vers l'axe et sur le côté, de manière à présenter à son extrémité une surface de contact externe d'étanchéité pour une surface radiale d'un autre objet, la lèvre étant flexible pour permettre un serrage compris dans une fourchette de quelques dixièmes de millimètre.

De préférence, ce joint est réalisé en alliage NC19FeNb.

Un rendement maximal du joint est obtenu lorsque l'épaisseur de la lèvre est égale à environ 0,5 mm.

Selon l'invention, le corps du joint est suffisamment massif pour que le centre de gravité de la section de tore du joint se trouve dans le corps ou proche de ce dernier.

Le joint est de préférence une pièce brute de forge où le cheminement du fibrage est fixé.

Un deuxième objet principal de l'invention est une turbomachine comportant :
- des aubes de turbine haute pression fixées à un disque de turbine ; et
- un labyrinthe fixé sur la face amont du disque par une surface aval qui s'écarte de la surface amont du disque vers l'intérieur du disque.

Selon l'invention, cette turbomachine comprend un joint tel que précédemment décrit fixé sur la surface aval du labyrinthe à l'endroit où celle-ci s'écarte du disque et ayant une lèvre intérieure qui s'applique sur la surface amont du disque pour assurer l'étanchéité de l'ensemble en fonctionnement.

Dans le cas où le labyrinthe se prolonge vers l'axe de la turbomachine par un redan s'écartant du disque et présentant une surface axiale interne, on creuse une cavité placée sur cette surface axiale interne, en regard du disque pour placer le corps du joint dans cette cavité avec un jeu entre le fond de la cavité et la surface externe du joint pour faciliter le montage. En fonctionnement, le joint a tendance à se plaquer contre le fond de la cavité.

Le joint est de préférence monté contraint avec un serrage de l'extrémité de la lèvre sur la face amont du disque compris entre 0,2 et 1,2 mm.

Il est de préférence revêtu d'un anti-grippant.

### Liste des figures

L'invention et ses différentes caractéristiques seront mieux comprises à la lecture de la description, accompagnée de deux figures représentant respectivement :
- figure 1, en demi-coupe, le disque de la turbine haute pression d'un turboréacteur et le joint selon l'invention placé sur ce dernier ; et
- figure 2, en coupe partielle, le joint selon l'invention installé sur le disque de la figure 1.

### Description détaillée d'une réalisation de l'invention

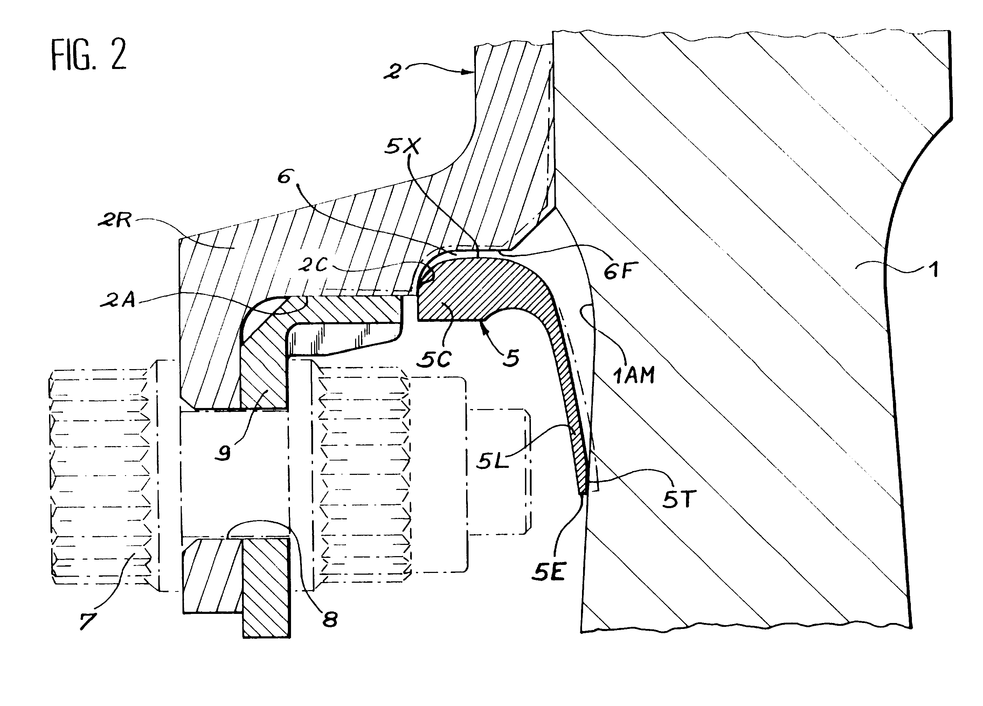

En restant avec la figure 1, le joint selon l'invention est repéré 5. Il est placé contre la surface aval 2C du labyrinthe 2, dans le redan 2R. Le redan 2R du labyrinthe 2 a pour fonction de permettre la fixation de masselottes d'équilibrage 9 par des boulons 7, représentés en traits mixtes sur la figure 2, passant dans des trous 8 du redan 2R du labyrinthe. Cette présence du redan favorise donc la mise en place du joint 5.

La figure 2 montre en détail cette installation. On y retrouve le disque 1, le redan 2R du labyrinthe et le joint 5. Celui-ci comprend d'ailleurs un corps 5C, plutôt massif et une lèvre 5L, s'étendant sur le côté du corps 5C, en direction de l'axe non représenté sur cette figure du disque 1. En d'autres termes, le diamètre de l'extrémité 5E de la lèvre 5L est inférieur au diamètre extérieur de la surface extérieure 5X du corps 5C du joint 5.

Pour le positionnement du joint 5, sur la surface axiale 2A du redan 2R, on pratique une cavité 6, de forme complémentaire à la surface externe 5X du corps 5C du joint 5. Dans le cas présent, cette cavité 6 a une portion de fond plat et un arrondi relativement large pour permettre au corps 5C de venir s'y loger.

On a représenté en traits mixtes une deuxième position de la lèvre 5L. Ceci symbolise la flexibilité de celle-ci, pour permettre une certaine adaptation du joint à différentes positions ou positionnements du disque 1. On précise que cette flexibilité ou ce serrage doit avoir une valeur S comprise entre 0,2 et 1,2 mm. A cet effet, on précise que l'extrémité 5E du joint doit avoir une épaisseur d'environ 0,4mm.

En d'autres termes, lorsque le joint est mis en place, son extrémité 5E s'appuie par sa surface de contact externe 5T sur la surface amont 1AM du disque 1 avec une force telle que, si le disque 1 est ôté, l'extrémité 5E de la lèvre 5L aura une position définie par les deux cotes 0,2 et 1,2 mm par rapport à la position initiale qu'elle a, lorsqu'elle est serrée contre le disque 1. La position fantôme suggérée par les traits mixtes symbolise ce débattement.

D'autre part, dans la cavité 6, entre le fond 6F de la cavité et la surface externe 5X du joint 5, subsiste un espace, lorsque le moteur est au repos, c'est-à-dire lorsque l'ensemble ne tourne pas. Par contre, en fonctionnement, les forces centrifuges étant très importantes, le joint 5, dont le centre de gravité se trouve dans le corps 5C, compte tenu de la masse relative de ce dernier, a tendance à s'écarter de l'axe A de la machine.

En d'autres termes, le diamètre extérieur de la surface externe 5X a tendance à augmenter et le joint 5 a tendance à se coller sur le fond 6F de la cavité 6. Ceci augmente la qualité du contact du joint 5 sur le disque 1 et l'efficacité de l'étanchéité ainsi réalisée. En d'autres termes, les forces centrifuges ont tendance à plaquer élastiquement le joint 5 contre le disque 1 et assurer un auto-serrage de ce joint.

Au montage du joint 5, une déformation plastique de ce dernier est tolérée, de manière à ce qu'il s'adapte à la géométrie du disque 1 et à celle du labyrinthe 2, sans toutefois nuire à ses qualités d'élasticité fonctionnelles. Cette déformation engendre ainsi l'effort d'appui dû au serrage sur les composants adjacents, ce qui favorise le maintien du joint 5 en place. En conclusion, le joint 5 est monté sous contrainte. Pour éviter un marquage des pièces adjacentes au joint 5, ce dernier peut être équipé d'un revêtement anti-grippant, par exemple du graphite.

L'espace entre le joint 5 et la cavité 6 peut varier car il dépend d'une combinaison de tolérances dimensionnelles de ces deux composants. Pendant le fonctionnement, le contact du joint 5 au fond 6F de la cavité 6 n'est pas nécessaire, mais peut avoir lieu. Il dépend de l'empilage des tolérances intervenant dans ce montage.

Un métal particulièrement bien adapté à la construction du joint selon l'invention est l'alliage au nikel-chrome, référencé NC19FeNb.

On fabrique de préférence le joint à partir d'une pièce brute de forgeage, dans laquelle on a pris la précaution d'obtenir la forme d'ébauche en respectant un cheminement du fibrage du métal.

### Avantages de l'invention

Ils sont de deux ordres :
- la technologie employée est simple et les tolérances dimensionnelles larges, notamment grâce au système de l'espace entre le joint 5 et la cavité 6 du labyrinthe 2 ; et
- le système permet d'équiper des turboréacteurs existant déjà.

## Revendications

1. Joint (5) métallique à lèvre, formant une pièce de révolution d'axe A et comportant une lèvre (5L) fixée sur un corps (5C) et s'étendant vers l'axe (A) et sur le côté du corps (5C), de manière à présenter à son extrémité (5E) une surface de contact externe (5T) d'étanchéité pour une surface radiale (1AM) d'un autre objet (1), la lèvre (5L) étant flexible pour permettre un serrage compris dans une fourchette de serrage de quelques dixièmes de millimètres, caractérisé en ce qu'il comprend un corps (5C) torique, de diamètre externe et d'axe (A) déterminés, et suffisamment massif pour que le centre de gravité de la section de tore du joint se trouve dans le corps ou proche de ce dernier.

2. Joint selon la revendication 1, caractérisé en ce qu'il est constitué d'un alliage au nickel-chrome du type NC19FeNb.

3. Joint selon la revendication 1, caractérisé en ce que l'épaisseur (E) de la lèvre (5L) est égale à environ 0,5 mm.

4. Joint selon la revendication 1, caractérisé en ce qu'il est fabriqué à partir d'une pièce brute forgée, où le cheminement du fibrage est fixé.

5. Turbomachine comportant :
- des aubes (4) de turbine fixées à un disque (1) de turbine ; et
- un labyrinthe (2) fixé sur la face amont (1AM) du disque (1) par une surface aval (2AV) qui s'écarte de la surface amont (1AM) du disque (1),
caractérisée en ce qu'elle comprend un joint (5) comportant une lèvre (SL) fixée sur un corps (SC) torique, de diamètre externe et d'axe (A) déterminés, et suffisamment massif pour que le centre de gravité de la section de tore du joint se trouve dans le corps ou proche de ce dernier suivant l'une quelconque des revendications précédentes, fixé sur la surface aval (2AV) du labyrinthe (2), à un endroit où celle-ci s'écarte du disque (1) et ayant sa lèvre (5L) qui s'applique sur la surface amont (1AM) du disque (1) pour assurer l'étanchéité de l'ensemble pendant le fonctionnement de la turbomachine.

6. Turbomachine selon la revendication 5 et dont le labyrinthe (2) se prolonge vers l'axe (A) de la turbomachine par un redan (2R) s'écartant du disque (1) et présentant sur sa surface axiale interne (2A) une cavité (6) placée en regard du disque (1), le corps (5C) du joint (5) étant placé dans cette cavité (6) avec un jeu entre le fond (6F) de la cavité (6) et la surface externe (5X) du joint (5), pour que, en fonctionnement, le joint (5) ait tendance à se plaquer contre le fond (6F) de la cavité (6).

7. Turbomachine selon la revendication 6, caractérisée en ce que le joint (5) est monté contraint avec un serrage (S) de l'extrémité (5E) de la lèvre (5L) sur la surface amont (1AM) du disque (1) tel que 0,2 mm < S < 1,2 mm.

8. Turbomachine selon la revendication 6, caractérisée en ce que le joint (5) est revêtu d'un anti-grippant.

## Patentansprüche

1. Metallische Lippendichtung (5), die ein drehsymmetrisches Teil mit einer Rotationsachse (A) bildet und eine Lippe (5L) besitzt, die an einem Körper (5C) befestigt ist und sich auf der Seite des Körpers (5C) in Richtung zu der Achse (A) erstreckt, so daß sie an ihrem Ende (5E) eine äußere Kontaktdichtungsfläche (5T) für eine radiale Fläche (1AM) eines anderen Objekts (1) bildet, wobei die Lippe (5L) flexibel ist, um eine Verspannung zu ermöglichen, die in einem Bereich von einigen Zehntel Millimetern liegt,
**dadurch gekennzeichnet,**
daß sie einen torusförmigen Körper (5C) besitzt, dessen Außendurchmesser und Achse (A) festgelegt sind und der hinreichend massiv ist, so daß der Schwerpunkt der Torusquerschnittsfläche der Dichtung innerhalb des Körpers oder in der Nähe des letzteren liegt.

2. Dichtung nach Anspruch 1,
dadurch gekennzeichnet,
daß sie aus einer Nickel-Chrom-Legierung des Typ NC19FeNb besteht.

3. Dichtung nach Anspruch 1,
dadurch gekennzeichnet,
daß die Dicke (E) der Lippe (5L) etwa 0,5 mm beträgt.

4. Dichtung nach Anspruch 1,
dadurch gekennzeichnet,
daß sie aus einem Schmiederohling hergestellt ist, in dem die Orientierung des Faserverlaufs fixiert ist.

5. Turbomaschine mit
- Turbinenschaufeln (4), die an einer Turbinenscheibe (1) befestigt sind und
- einem Labyrint (2), das auf der stromaufwärtigen Seite (1AM) der Scheibe mit einer stromabwärtigen Seite (2AV) befestigt ist, die sich von der stromaufwärtigen Seite (1AM) der Scheibe entfernt,
**dadurch gekennzeichnet,**
daß sie eine Dichtung (5) umfaßt mit einer Lippe (5L) nach einem oder mehreren der vorhergehenden Ansprüche, die an einem torusförmigen Körper (5C) befestigt ist, dessen Außendurchmesser und Achse (A) festgelegt sind und der hinreichend massiv ist, so daß der Schwerpunkt der Torusquerschnittsfläche der Dichtung innerhalb des Körpers oder in der Nähe des letzteren liegt,
wobei die Dichtung (5) auf der stromabwärtigen Seite (2AV) des Labyrints (2) an einer Stelle befestigt ist, an der diese Fläche sich von der Scheibe (1) entfernt,
und wobei die Lippe (5L) sich an die stromaufwärtige Fläche (1AM) der Scheibe anlegt, um während des Betriebs der Turbomaschine die Dichtigkeit der Baugruppe zu gewährleisten.

6. Turbomaschine nach Anspruch 5, deren Labyrint (2) sich in Richtung zur Achse (A) der Turbomaschine in einem Absatz (2R) verlängert, der sich von der Scheibe (1) entfernt und auf seiner inneren axialen Fläche (2A) einen Hohlraum (6) bildet, der der Scheibe (1) zugewandt ist, wobei der Körper (5C) der Dichtung (5) in diesem Hohlraum (6) mit einem Spiel zwischen dem Boden (6F) des Hohlraums (6) und der Außenfläche (5X) der Dichtung (5) so angeordnet ist, daß die Dichtung während des Betriebs die Tendenz hat, sich gegen den Boden (6F) des Hohlraums (6) pressen.

7. Turbomaschine nach Anspruch 6,
dadurch gekennzeichnet,
daß die Dichtung (5) so montiert ist, daß das Ende (5E) der Lippe (5L) unter einer Verspannung S an der stromaufwärtigen Fläche (1 AM) der Scheibe (1) anliegt, wobei 0,2 < S < 1,2 mm ist.

8. Turbomaschine nach Anspruch 6,
dadurch gekennzeichnet,
daß die Dichtung (5) mit einer Antihaftbeschichtung versehen ist.

## Claims

1. Metallic lip seal (5), forming a part with symmetry of revolution about an axis A and comprising a lip (5L) fixed to a body (5C) and extending towards the axis (A) and on the side of the body (5C), so as to exhibit at its end (5E), an external contact surface (5T) for sealing with a radial surface (1AM) of another object (1), the lip (5L) being flexible so as to allow clamping within a clamping range of a few tenths of a millimetre, characterized in that it comprises a torus-shaped body (5C) of given outside diameter and given axis (A) and which is sizeable enough that the centre of gravity of the torus section of the seal lies inside the body or close to the latter.

2. Seal according to Claim 1, characterized in that it is made of a nickel-chromium alloy of the NC19FeNb type.

3. Seal according to Claim 1, characterized in that the thickness (E) of the lip (5L) is approximately 0.5 mm.

4. Seal according to Claim 1, characterized in that it is made from a part-finished forging in which the fibre orientation is fixed.

5. Turbomachine comprising:
- turbine blades (4) fixed to a turbine disc (1); and
- a labyrinth (2) fixed to the upstream face (1AM) of the disc (1) by a downstream surface (2AV) which diverges from the upstream surface (1AM) of the disc (1),
the turbomachine being characterized in that it comprises a seal (5) comprising a lip (5L) fixed to a torus-shaped body (5C) of given outside diameter and given axis (A), and which is sizeable enough that the centre of gravity of the torus section of the seal lies inside the body or close to the latter, according to any one of the preceding claims, this seal being fixed to the downstream surface (2AV) of the labyrinth (2) at a point where this surface diverges from the disc (1) and having its lip (5L) pressed against the upstream surface (1AM) of the disc (1) in order to seal the assembly while the turbomachine is in operation.

6. Turbomachine according to Claim 5, and in which the labyrinth (2) is extended towards the axis (A) of the turbomachine by a step (2R) diverging from the disc (1) and having, on its internal axial surface (2A), a cavity (6) placed facing the disc (1), the body (5C) of the seal (5) being placed in this cavity (6) with clearance between the bottom (6F) of the cavity (6) and the external surface (5X) of the seal (5) so that during operation the seal (5) tends to press itself against the bottom (6F) of the cavity (6).

7. Turbomachine according to Claim 6, characterized in that the seal (5) is mounted with preload with the end (5E) of the lip (5L) clamped (S) onto the upstream surface (1AM) of the disc (1) in such a way that 0.2 mm < S < 1.2 mm.

8. Turbomachine according to Claim 6, characterized in that the seal (5) is coated with something to prevent it from seizing.
